# EUROPÄISCHE PATENTSCHRIFT

(11) **EP 0 603 560 B1**
(45) Veröffentlichungstag und Bekanntmachung des Hinweises auf die Patenterteilung: **20.08.1997**
(21) Anmeldenummer: 93118835.3
(22) Anmeldetag: 23.11.1993
(51) Int. Cl.: G05B 19/05

(54) **Modular aufgebautes Steuerungssystem mit einer intelligenten Untereinheit**
Modular control system with an intelligent sub-unit
Système de commande modulaire comprenant une sous-unité intelligente

(30) Priorität: 08.12.1992 DE 4241338
(43) Veröffentlichungstag der Anmeldung: 29.06.1994
(73) Patentinhaber: SIEMENS AKTIENGESELLSCHAFT, 80333 München (DE)
(72) Erfinder: Franke, Kurt, Dipl.-Ing,, D-50767 Köln (DE); Wiedemann, Wolfgang, Dipl.-Ing., D-50181 Bedburg (DE)

(56) Entgegenhaltungen:
- EP-A- 0 109 734
- EP-A- 0 207 175
- EP-A- 0 416 331
- EP-A- 0 434 986
- EP-A- 0 473 086
- EP-A- 0 490 864
- US-A- 4 118 771
- US-A- 4 442 504
- US-A- 4 882 702
- US-A- 5 062 052

## Beschreibung

Die vorliegende Erfindung betrifft ein modular aufgebautes Steuerungssystem mit einer intelligenten Untereinheit, insbesondere modular aufgebaute speicherprogrammierbare Steuerung mit einer intelligenten Peripheriebaugruppe, die eine Anzahl von im wesentlichen elektrisch und mechanisch gleichgestalteten Modulaufnahmen für Funktionsmodule aufweist,
- wobei die Modulaufnahmen mit einem internen Bus verbundene Modulschnittstellen mit einer Vielzahl von Kontaktstellen aufweisen,
- wobei die Modulaufnahmen anwendungsspezifisch mit Funktionsmodulen bestückbar sind,
- wobei die Modulschnittstellen untereinander über einen Steckplatzbus verbunden sind,
- wobei in der intelligenten Untereinheit über den internen Bus ein die intelligente Untereinheit steuernder Prozessor und ein zumindest ein Prozessorprogramm enthaltender Speicher miteinander verbunden sind.

Ein einfaches Steuerungssystem in Form einer modular aufgebauten speicherprogrammierbaren Steuerung, allgemein und auch im folgenden kurz SPS genannt, ist beispielsweise im Siemens-Katalog ST 54.1, Ausgabe 1992 beschrieben. Die intelligente Untereinheit entspricht beispielsweise der Regelungsbaugruppe IP 252.

Derartige, modular aufgebaute Steuerungssysteme sind für zeitkritische Anwendungen, z.B. für die Steuerung einer sogenannten fliegenden Schere, zu langsam. Zum Teil liegt dies daran, daß die Steuerungssysteme schon länger auf dem Markt sind und daher nicht die neueste und schnellste Technologie verwenden. Auch neuere Systeme sind jedoch häufig bei schnellen Anwendungen nicht einsetzbar, da sie nicht auf die spezielle Anwendung zugeschnitten sind und folglich nicht auf diese Anwendung optimiert sind. Dies ist auch prinzipiell unmöglich, da mit dem modular aufgebauten Steuerungssystem die verschiedensten Anlagen automatisierbar sein sollen und das Steuerungssystem hierzu in verschiedenen Ausbaugraden funktionsfähig sein muß. Aus diesen Anforderungen an das Steuerungssystem ergeben sich verschiedene Randbedingungen, die zu Einschränkungen bei der maximal erreichbaren Zugriffsgeschwindigkeit führen. Darüber hinaus wäre ein derartiges System auch zu teuer, da für eine Reihe von Aufgaben die hohe Geschwindigkeit des Systems nicht erforderlich wäre.

Die bisher bekannten intelligenten Untereinheiten sind teilweise zwar schnell genug für die Steuerung zeitkritischer Prozesse, die sind aber im Regelfall zu klein für die Steuerung kleiner, unabhängiger, schneller Teilprozesse bzw. Teilanlagen und auch nicht flexibel genug an den jeweiligen Anwendungsfall, wie z.B. die Steuerung einer fliegenden Schere, anpaßbar.

Bisher wurden daher für die Automatisierung derartiger Prozesse und Anlagen in Digital- oder Analogtechnik aufgebaute, separate Steuerungen verwendet. Eine Einbindung in ein umfassendes Automatisierungssystem fand nicht statt und war teilweise auch prinzipiell nicht möglich. Die Einbindung in ein umfassendes Automatisierungssystem ist im Zuge des allgemeinen Trends zur Automatisierung und Vernetzung von Anlagen jedoch unumgänglich.

Aus der EP-A1-0 490 864 ist ein modular aufgebauter Controller bekannt, von dem die Erfindung ausgeht. Dieser Controller ist jedoch nicht Teil eines Bussystems und weist keine spezifischen Komponenten zur Beschleunigung der ablaufenden Rechenprozesse auf.

Aus der EP-A3-0 434 986 sind Baugruppen bekannt, die zur Verwendung mit einem Automatisierungssystem bestimmt sind. Diese Baugruppen sind in sich modulartig aufgebaut. Sie sind ebenso wie die am Beginn der Einleitung genannten intelligenten Untereinheiten aber nicht zur Regelung sehr schneller Vorgänge ausgebildet.

Weiterhin ist aus der US-A-4 882 702 ein System mit programmierbaren Controllern bekannt, das Eingabe/Ausgabemodule aufweist. Auch hier sind keine besonderen Maßnahmen zur Verbindung mit einem Automatisierungssystem und zur Beschleunigung der ablaufenden Rechenvorgänge vorgesehen.

Aus der EP-A1-0 473 086 ist weiterhin ein Processor für einen programmierbaren Controller bekannt, der in bekannter Weise mit Kommunikationsprozessoren und weiteren programmierbaren Controllern zusammenarbeitet. Auch dieser Processor ist nicht auf eine besondere Beschleunigung der ablaufenden Rechenprozesse unter Beibehaltung eines einfachen Aufbau des Gesamtsystems abgestellt.

Die Aufgabe der vorliegenden Erfindung besteht folglich darin, die Einbindung schneller Teilprozesse bzw. Teilanlagen in ein umfassendes Automatisierungssystem zu ermöglichen. Insbesondere soll ein modular aufgebautes Steuerungssystem zur Verfügung gestellt werden, mit dem die Steuerung kleiner, schneller Anwendungen möglich ist. Die Aufgabe wird dadurch gelöst, daß
- die intelligente Untereinheit über einen externen Systembus mit einer übergeordneten Zentraleinheit verbindbar ist, und eine mit dem externen Systembus verbindbare Busschnittstelleneinheit aufweist,
- wobei der interne Bus mit einer höheren Taktrate betreibbar ist als der externe Systembus und
- wobei zumindest ein Teil der Funktionsmodule eine eigene intelligente Einheit, z.B. einen Controller, aufweisen.

Durch diese Lösung ist es möglich, die intelligente Untereinheit im wesentlichen unabhängig von dem modular aufgebauten Steuerungssystem zu betreiben sowie die intelligente Untereinheit anwendungsspezifisch aufzurüsten. Die intelligente Untereinheit stellt also sozusagen ein kleines, in sich geschlossenes Steuerungssystem ("SPS in der SPS") dar. Auch ist es möglich, den internen Bus mit einer erheblich höheren Taktrate zu betreiben als den externen Systembus. Eine derartige intelligente Untereinheit ist auch erheblich leichter, vor allem unabhängig vom Steuerungssystem, weiterentwickelbar, da die Kommunikation der intelligenten Untereinheit mit der übergeordneten Zentraleinheit über die Busschnittstelleneinheit erfolgt.

Als Funktionsmodule kommen dabei sowohl Analog- als auch Digitalmodule in Frage, und zwar sowohl Eingabe- als auch Ausgabe- als auch gemischte Ein-/Ausgabemodule. Die Funktionsmodule können auch eine eigene Intelligenz, z. B. einen Controller aufweisen.

Vorzugsweise sind die Funktionsmodule interruptfähig. Hierzu sind einige der Kontaktstellen der Modulschnittstellen, vorzugsweise über einen Interruptcontroller, mit einem Interrupteingang des Prozessors verbunden.

Wenn die Modulschnittstellen untereinander über einen Steckplatzbus verbunden sind, können die Funktionsmodule vorteilhaft ohne Inanspruchnahme des internen Busses Informationen untereinander austauschen.

Weiterhin ist es möglich, das System mit einem separaten Signalprozessor auszurüsten. Dieser kann, je nach den Geschwindigkeitsanforderungen, parallel zur Zentraleinheit oder auf einem Signalprozessormodul angeordnet werden. Hierzu ist der Steckplatzbus besonders vorteilhaft.

Wenn die intelligente Untereinheit eine Programmierschnittstelle zum Anschließen einer Programmiereinheit, z. B. eines Programmiergeräts, aufweist, ist die intelligente Untereinheit unabhängig von der übergeordneten Zentraleinheit direkt programmierbar. Die Programmierung der intelligenten Untereinheit belastet dadurch nicht den externen Systembus.

Um eine fliegende Schere anzusteuern, ist die intelligente Untereinheit mit einem Analog-Ausgabemodul oder einem Analog-Ein-/Ausgabemodul, einem Digital-Eingabemodul oder einem Digital-Ein-/Ausgabemodul und einem Zählermodul bestückt.

Weiter Vorteile und Einzelheiten ergeben sich aus der nachfolgenden Beschreibung eines Ausführungsbeispiels und anhand der Zeichnungen. Dabei zeigen:
- FIG 1: ein Blockschaltbild einer speicherprogrammierbaren Steuerung;
- FIG 2: ein Blockschaltbild einer intelligenten Untereinheit;
- FIG 3: den prinzipiellen konstruktiven Aufbau der intelligenten Untereinheit;
- FIG 4: ein Blockschaltbild eines Funktionsmoduls und
- FIG 5: eine Regelschaltung für eine fliegende Schere.

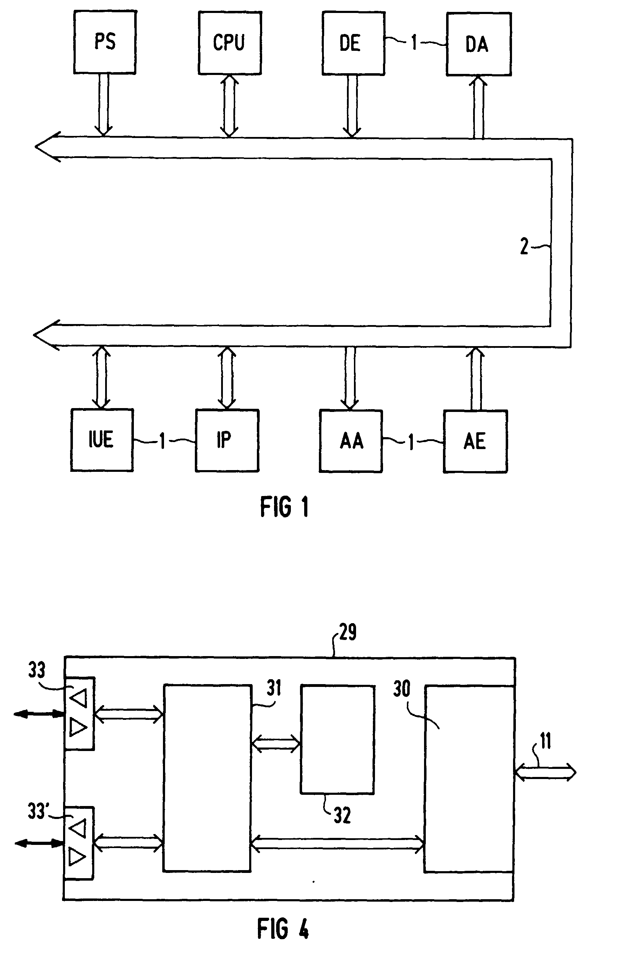

Gemäß FIG 1 besteht eine typische modular aufgebaute speicherprogrammierbare Steuerung (SPS) aus einer Stromversorgungsbaugruppe PS und einer Zentraleinheit CPU sowie Peripheriebaugruppen 1. Die Peripheriebaugruppen 1 umfassen beispielsweise Digital-Eingabebaugruppen DE, Digital-Ausgabebaugruppen DA, Analog-Eingabebaugruppen AE, Analog-Ausgabebaugruppen AA sowie intelligente Peripheriebaugruppen IP, z. B. Reglerbaugruppen, und zumindest eine intelligente Peripheriebaugruppe bzw. Untereinheit IUE. Die Peripheriebaugruppen 1 sind über den Systembus 2 mit der CPU verbunden und werden auch über den Systembus 2 mit Strom versorgt. Typische Beispiele derartiger SPSen sind die Siemens-Automatisierungssysteme SIMATIC S5-115 U, S5-135 U oder S5-155 U.

Die SPS gemäß FIG 1 steuert einen technischen Prozeß. Sowohl Aufbau als auch Funktion der SPS mit Ausnahme der intelligenten Untereinheit IUE sind dabei konventioneller Natur. Auf sie wird daher im folgenden nicht näher eingegangen.

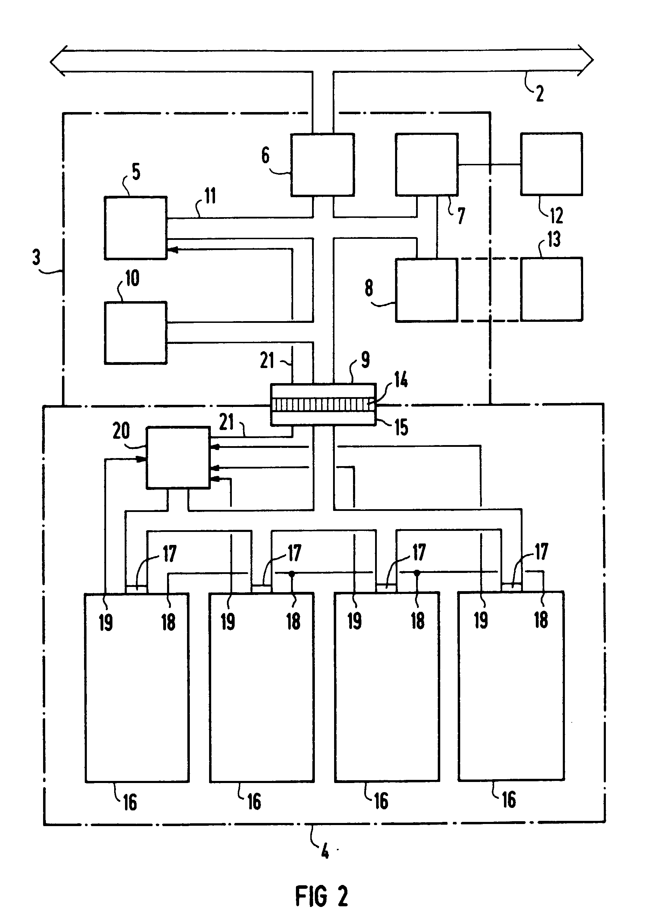

Gemäß FIG 2 weist die intelligente Untereinheit IUE einen Prozessorteil 3 sowie einen Modulteil 4 auf. Der Prozessorteil 3 weist einen Prozessor 5, einen als Busschnittstelleneinheit ausgebildeten Buscontroller 6, eine Programmierschnittstelle 7, eine Anwenderspeicherschnittstelle 8, eine Modulteilschnittstelle 9 sowie einen Speicher 10 auf, die über den internen Bus 11 miteinander verbunden sind.

Über die Programmierschnittstelle 7 ist ein Programmiergerät 12 an den Prozessorteil 3 anschließbar, so daß die intelligente Untereinheit IUE völlig unabhängig von der restlichen SPS programmierbar und betreibbar ist. Bei Programmierung über das Programmiergerät 11 wird das Steuerungsprogramm für den Prozessor 5 direkt in den Speicher 10 geschrieben. Alternativ ist es auch möglich, ein Speichermodul 13 mit dem Steuerungsprogramm für den Prozessor 5 zu programmieren und das Anwenderspeichermodul 13 in die Anwenderspeicherschnittstelle 8 einzustecken.

Der Prozessorteil 3 ist über seine Modulteilschnittstelle 9, ein Verbindungselement 14, z. B. einen Stecker oder ein Flachbandkabel, sowie die Prozessorteilschnittstelle 15 des Modulteils 4 mit dem Modulteil 4 verbunden.

Das Modulteil 4 weist mehrere, z. B. vier, Steckplätze bzw. Modulaufnahmen 16 mit Modulschnittstellen 17 auf, über die in die Steckplätze 16 einzusteckende steckbare Funktionsmodule mit dem internen Bus 11 des Prozessorteils verbunden sind. Die Modulschnittstellen 17 sind im wesentlichen alle elektrisch und mechanisch gleichgestaltet. Sie weisen eine Vielzahl von Kontaktstellen auf, von denen einige jedoch nicht mit dem internen Bus 11 verbunden sein müssen.

Beispielsweise ist ggf. pro Steckplatz 16 mindestens eine Steckplatzbus-Kontaktstelle vorhanden, die nicht mit dem internen Bus 11 verbunden ist, sondern nur der Steckplatzverbindung dient. Über dieses Datenlink können beliebige Daten ausgetauscht werden.

Weiterhin sind je zwei Interrupt-Kontaktstellen 19 der Modulschnittstellen 17 ebenfalls nicht mit dem internen Bus 11, sondern mit einem Interrupt-Controller 20 verbunden. Der Interrupt-Controller 20 ist einerseits mit dem internen Bus 11 und andererseits über die Leitung 21 mit einem Interrupt-Eingang des Prozessors 5 verbunden. Dadurch, daß zunächst der Interrupt-Controller anstehende Interrupts auswertet, dann über einen eigenen Interrupt dem Prozessor 5 dies meldet und sodann einen Interruptvektor über den internen Bus 11 an den Prozessor 5 übermitteln kann, kann die Anzahl der benötigten Leitungen des Verbindungselements 14 sowie der Kontakte der zugehörigen Schnittstellen 9 und 15 deutlich reduziert werden.

Die obenstehend beschriebenen Steckplatzbus-Kontaktstellen 18 und die Interrupt-Kontaktstellen 19 sind integrale Bestandteile der Modulschnittstellen 17. Sie wurden jedoch der besseren Darstellung halber getrennt von den Modulschnittstellen 17 gezeichnet.

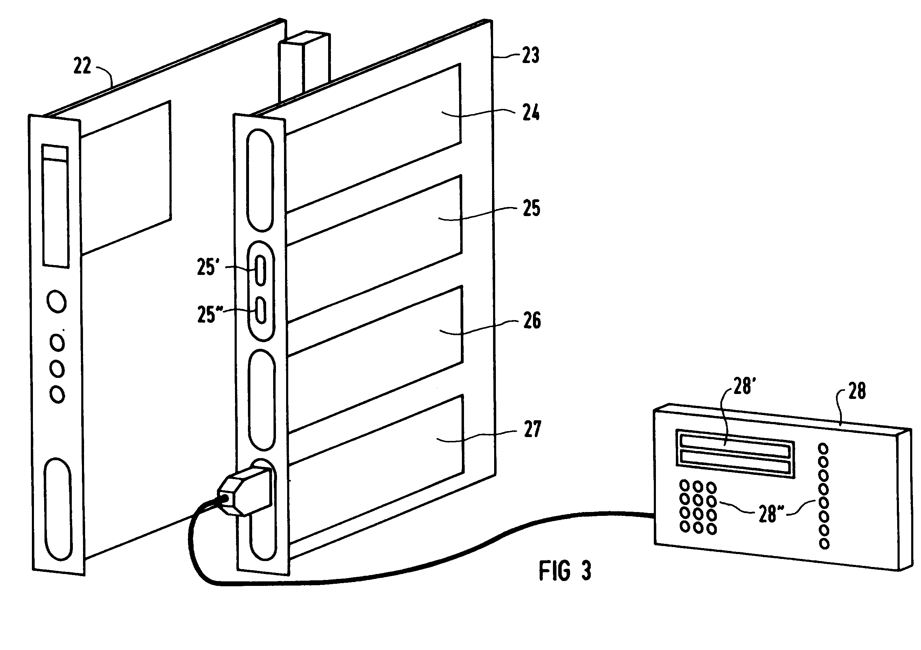

FIG 3 zeigt eine beispielhafte Konfiguration der intelligenten Untereinheit IUE. Gemäß FIG 3 besteht die intelligente Untereinheit IUE aus zwei getrennten Platinen 22, 23, die über nicht dargestellte Abstandsbolzen miteinander verschraubbar sind. Natürlich kann auch eine Einplatinenlösung gewählt werden. Ebenfalls nicht dargestellt in FIG 3 sind die Modulteilschnittstelle 9, das Verbindungselement 14 sowie die Prozessorteilschnittstelle 15. In FIG 3 ist die Modulteilplatine 23 mit vier verschiedenen, beispielshaften Funktionsmodulen 24 bis 27 bestückt.

Das Funktionsmodul 24 ist ein gemischtes Digital-Ein-/Ausgabemodul. Das Funktionsmodul 24 könnte aber ebenso ein reines Digital-Ein- bzw. Ausgabemodul sein oder noch anders figuriert werden.

Das Funktionsmodul 25 ist ein Schnittstellenmodul, das der intelligenten Untereinheit IUE zwei serielle Schnittstellen 25', 25'' zur Verfügung stellt. Über diese Schnittstellen 25', 25'' kann die intelligente Untereinheit IUE mit anderen Automatisierungssystemen kommunizieren.

Das Funktionsmodul 26 ist als Analog-Eingabemodul ausgebildet. Es könnte aber ebenso als Analog-Ausgabemodul oder als gemischtes Analog-Eingabe-/Ausgabemodul ausgebildet sein.

Die Wahl der Funktionsmodule erfolgt entsprechend den Anforderungen. Gegebenenfalls können also beispielsweise auch zwei oder drei Digital-Ein-/Ausgabemodule verwendet werden.

Das Funktionsmodul 27 ist ein Bedienfeldmodul. Über das Bedienfeldmodul 27 ist ein Bedienfeld 28 mit einer alphanumerischen Anzeige 28' und einer Tastatur 28'' an die intelligente Untereinheit IUE anschließbar.

Weitere, in FIG 3 nicht dargestellte Funktionsmodule sind beispielsweise ein Zählermodul, ein Speichermodul, ein Signalprozessormodul und ein Absolutweggebermodul. Sowohl die zuletzt genannten Funktionsmodule als auch die in FIG 3 dargestellten Funktionsmodule 24 bis 27 können eine eigene Intelligenz, insbesondere einen Prozessor bzw. Controller, zur internen Signalvorverarbeitung und Entlastung des Prozessors 5 aufweisen.

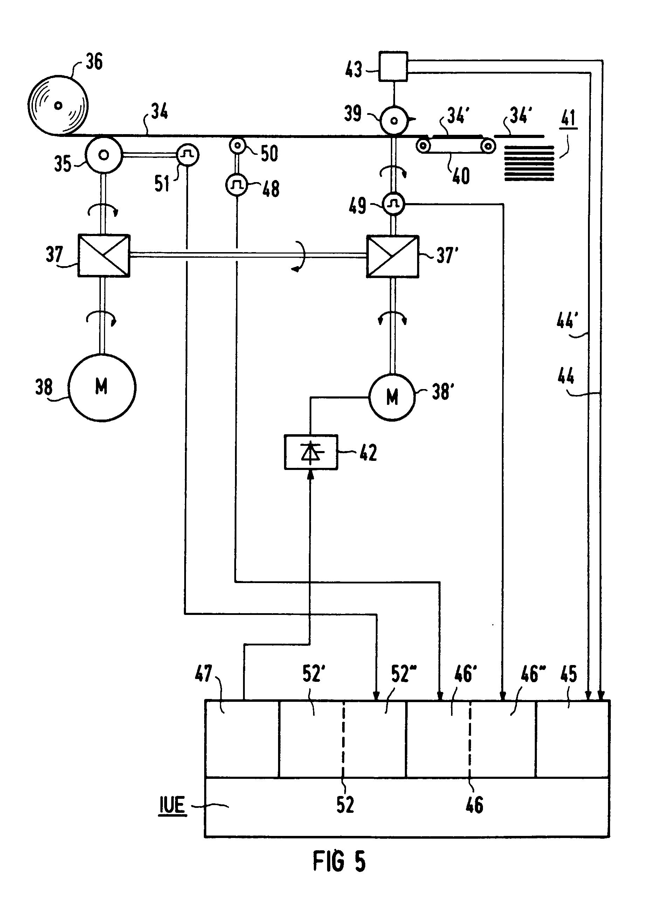

Beispielhaft ist dies in FIG 4 für das Absolutweggebermodul 29 gezeigt. Der in FIG 4 nicht dargestellte Prozessor 5 kann über den internen Bus 11 auf das dual-ported-RAM 30 zugreifen. Der Zugriff erfolgt dabei dadurch, daß zunächst über die Datenleitungen des internen Busses 11 eine Adresse in das RAM 30 eingespeichert wird und sodann ein Zugriff auf die soeben eingespeicherte Adresse erfolgt. Der Prozessor 5 kann dabei sowohl Daten aus dem RAM 30 auslesen als auch Daten in das RAM 30 einschreiben und so den Modulcontroller 31 parametrieren.

Das eigentliche Steuerprogramm des Modulcontrollers 31 ist im Speicher 32, der z. B. als EPROM ausgebildet ist, abgelegt. Der Controller 31 liest u. a. periodisch, z. B. im 1 ms-Takt, die an den Schnittstellen 33, 33' anstehenden Signale ein und bearbeitet sie entsprechend dem im Speicher 32 abgelegten Programm. Der Controller 31 kann die eingelesenen Werte z. B. umrechnen oder aus der Differenz zweier nacheinander eingelesener Werte die momentane Geschwindigkeit des gemessenen Elements berechnen. Die jeweils relevanten Daten speichert der Controller 31 im dual-ported-RAM 30 ab, so daß sie der Prozessor 5 auslesen kann.

Die intelligente Untereinheit IUE stellt also im Prinzip selbst eine kleine, modular aufgebaute SPS (incl. eigener "intelligenter Peripherie") dar. Sie weist zwar nur weniger Steckplätze 16 als die große "Mutter-SPS" auf, im vorliegenden Beispiel vier. Auch sind die Funktionsmodule 24 bis 27, 29 erheblich kleiner als die Peripheriebaugruppen der "Mutter-SPS". Das Digital-Ein-/Ausgabemodul 24 weist beispielsweise nur je 8 digitale Ein- und Ausgänge auf gegenüber je 32 Ein- und Ausgängen einer korrespondierenden Baugruppe der "Mutter-SPS". Die Steckplätze 16 sind aber ebenso wie bei einer großen SPS anwendungsspezifisch bestückbar. Ebenso ist die intelligente Untereinheit IUE unabhängig von der großen SPS anwendungsspezifisch programmierbar und unabhängig betreibbar.

Insbesondere wegen der geringen Anzahl von Steckplätzen 16 ist es von Vorteil, wenn gemischte Ein-/Ausgabemodule zur Verfügung stehen. Dadurch bleiben nämlich zwei Steckplätze 16 für andere Funktionsmodule frei, obwohl sowohl Analog-Eingabe als auch Analog-Ausgabe als auch Digital-Eingabe und Digital-Ausgabe benötigt werden.

Die intelligente Untereinheit IUE kann, wie obenstehend mehrfach erwähnt, unabhängig von der Zentraleinheit CPU der SPS betrieben werden. Der interne Bus 11 der intelligenten Untereinheit IUE kann sich dabei sowohl bezüglich Ausgestaltung als auch bezüglich der Datenrate von dem externen Systembus 2 der SPS unterscheiden. Beispielsweise kann der interne Bus 11 mit einer erheblich höheren Taktrate getaktet werden und z. B. eine Datenbreite von 32 Bit gegenüber 8 Bit des externen Systembusses 2 aufweisen. Dadurch stellt die intelligente Untereinheit IUE zwar eine erheblich kleinere, zugleich aber auch eine erheblich schnellere SPS dar. Aufgrund dieser Schnelligkeit der intelligenten Untereinheit IUE können von der intelligenten Untereinheit IUE und damit indirekt von der SPS schnelle Prozesse gesteuert werden, für die bisher SPSen zu langsam waren. Bisher wurden derartige Prozesse von separaten Spezialsteuerungen gesteuert. Jetzt ist es dagegen möglich, derartige Prozesse einfach und kostengünstig in ein umfassendes Automatisierungskonzept einzubinden.

Ein Beispiel eines derartigen Prozesses ist in FIG 5 dargestellt. Gemäß FIG 5 wird das Band 34 mittels der Abzugswalze 35 vom dem Haspel 36 abgezogen. Die Abzugswalze 35 wird dabei über das Hauptgetriebe 37 vom Hauptantrieb 38 angetrieben. Das Hauptgetriebe 37 weist zwei Anzapfungen auf, wobei die zweite Anzapfung mit dem Hilfsgetriebe 37' verbunden ist. Über das Hilfsgetriebe 37' wird auch die fliegende Schere 39, im Beispiel ein rotierendes Messer, vom Hauptantrieb 38 angetrieben. Das Band 34 wird daher durch die fliegende Schere 39 in Stücke 34' geschnitten, die über das Laufband 40 zu einem Stapel 41 gestapelt werden.

Bei stehendem Stellantrieb 38' laufen Abzugswalze 35 und fliegende Schere 39 mit exakt gleicher Geschwindigkeit. Bei stehendem Stellantrieb 38' ist die Schnittlänge weder variierbar noch einstellbar. Die Schnittlänge wird daher dadurch eingestellt und variiert, daß während des Zeitintervalls zwischen zwei Schnitten der Stellantrieb 38' über den Stromsteller 42 angesteuert wird. Die Ansteuerung des Stellantriebs 38' geschieht dabei wie folgt:

Es ist angenommen, daß die fliegende Schere 39 sich gerade in ihrer Schneidstellung befindet. Zu diesem Zeitpunkt muß die Schere Gleichlauf zu dem Material aufweisen. Nach dem Schneiden sendet der Signalgeber 43 ein Startsignal über die Leitung 44 zum Digital-Eingabemodul 45 der intelligenten Untereinheit IUE. Das Digital-Eingabemodul 45 sendet daraufhin einen Interrupt an den in FIG 5 nicht dargestellten Interruptcontroller 20, der seinerseits wiederum einen Interrupt an den in FIG 5 ebenfalls nicht dargestellten Prozessor 5 sendet. Der Prozessor 5 gibt darauf die Längenregelung frei und steuert den Stromsteller 42 an.

Aufgrund der Daten der Zähler 46', 46'' werden während des Ansteuerns des Stromstellers 42 über die Winkelschrittgeber 48 und 49 die abgelaufene Blechlänge und der Winkel der fliegenden Schere 39 erfaßt. Die intelligente Untereinheit IUE kann daher, gegebenenfalls nach einer Umrechnung, die Verstellung der fliegenden Schere 39 relativ zum Band 34 ermitteln. Wenn die gewünschte Verstellung der fliegenden Schere 39 erreicht ist, wird der Stromsteller 42 nicht mehr angesteuert.

Wenn die fliegende Schere 39 sodann in ihre Schneidstellung kommt, übermittelt der Signalgeber 43 über die Leitung 44' ein Stoppsignal an das Digital-Eingabemodul 45.

Spätestens zu diesem Zeitpunkt muß der Stellantrieb 38' gestoppt sein.

Auch hier ist die Leitung 44' wieder mit einem interruptfähigen Eingang des Eingabemoduls 45 verbunden. Der über die Leitung 44' übermittelte Impuls löst in der intelligenten Untereinheit IUE wieder einen Interrupt aus, aufgrund dessen die Zähler 46', 46'' gelöscht werden. Die Zähler 46', 46'' sind daher für das nächste zu schneidende Bandstück 34' bereit. Ferner bewirkt der ausgelöste Interrupt ein Stoppen des Stellantriebs 38' , selbst wenn die gewünschte Verstellung der fliegenden Schere noch nicht erreicht sein sollte.

Alternativ zu dem vom Winkelschrittgeber 48 gelieferten Signal kann auch das Signal verwendet werden, daß der Winkelschrittgeber 51 liefert, der mit der Abzugswalze 35 verbunden ist. Gegebenenfalls kann dieses Signal auch zusätzlich verwendet werden. In diesem Fall wird ein zweites Zählermodul 52 benötigt, da jedes Zählermodul 46, 52 nur zwei Zählereingänge aufweist.

Abschließend sei noch darauf hingewiesen, daß anstelle des Digital-Eingabemoduls 45 auch ein Digital-Ein-/Ausgabemodul verwendet werden kann. Ebenso kann anstelle des Analog-Ausgabemoduls 47 ein Analog-Ein-/Ausgabemodul verwendet werden. Ebenso können auch die verschiedensten schnellen Steuerungen, Meßdatenerfassungen, Datenvorverarbeitungen etc. von der erfindungsgemäßen intelligenten Untereinheit mit einer SPS verbunden werden.

## Patentansprüche

1. Modular aufgebautes Steuerungssystem mit einer intelligenten Untereinheit (IUE), insbesondere modular aufgebaute speicherprogrammierbare Steuerung mit einer intelligenten Peripheriebaugruppe, die eine Anzahl von im wesentlichen elektrisch und mechanisch gleichgestalteten Modulaufnahmen (16) für Funktionsmodule (24-27,29,45-47,52) aufweist,
- wobei die Modulaufnahmen (16) mit einem internen Bus (11) verbundene Modulschnittstellen (17) mit einer Vielzahl von Kontaktstellen aufweisen,
- wobei die Modulaufnahmen (16) anwendungsspezifisch mit Funktionsmodulen (24-27,29,45-47,52) bestückbar sind,
- wobei die Modulschnittstellen (17) untereinander über einen Steckplatzbus (18) verbunden sind,
- wobei in der intelligenten Untereinheit (IUE) über den internen Bus (11) ein die intelligente Untereinheit (IUE) steuernder Prozessor (5) und ein zumindest ein Prozessorprogramm enthaltender Speicher (10) miteinander verbunden sind,
**dadurch gekennzeichnet**, daß
- die intelligente Untereinheit (IUE) über einen externen Systembus (2) mit einer übergeordneten Zentraleinheit (CPU) verbindbar ist, und eine mit dem externen Systembus (2) verbindbare Busschnittstelleneinheit (6) aufweist,
- wobei der interne Bus (11) mit einer höheren Taktrate betreibbar ist als der externe Systembus (2) und
- wobei zumindest ein Teil der Funktionsmodule (24-27,29,45-47,52) eine eigene intelligente Einheit (31), z.B. einen Controller (31), aufweisen.

2. Modular aufgebautes Steuerungssystem nach Anspruch 1, **dadurch gekennzeichnet**, daß die Funktionsmodule (24-27,29,45-47,52) zumindest teilweise als Digital- bzw. Analog-Ein- bzw. Ausgabemodule, gegebenenfalls auch als Digital- bzw. Analog-Ein-/Ausgabemodule, ausgebildet sind.

3. Modular aufgebautes Steuerungssystem nach Anspruch 1 oder 2, **dadurch gekennzeichnet**, daß einige (19) der Kontaktstellen der Modulschnittstellen (17) mit einem Interrupteingang des Prozessors (5) verbunden sind.

4. Modular aufgebautes Steuerungssystem nach Anspruch 3, **dadurch gekennzeichnet**, daß zwischen den einigen Kontaktstellen (19) und dem Interrupteingang ein Interruptcontroller (20) angeordnet ist.

5. Modular aufgebautes Steuerungssystem nach einem der obigen Ansprüche, **dadurch gekennzeichnet**, daß es zumindest einen separaten Signalprozessor, vorzugsweise parallel zur Zentraleinheit (CPU) oder auf einem Signalprozessormodul, aufweist,

6. Modular aufgebautes Steuerungssystem nach einem der obigen Ansprüche, **dadurch gekennzeichnet**, daß die intelligente Untereinheit (IUE) eine Programmierschnittstelle (7) zum Anschließen einer Programmiereinheit (12), z.B. eines Programmiergeräts (12), aufweist.

7. Modular aufgebautes Steuerungssystem nach einem der obigen Ansprüche, **dadurch gekennzeichnet**, daß die Funktionsmodule (24-27,29,45-47,52) als steckbare Funktionsmodule ausgebildet sind.

8. Modular aufgebautes Steuerungssystem nach einem der obigen Ansprüche, **dadurch gekennzeichnet**, daß die intelligente Untereinheit (IUE) mit einem Analog-Ausgabemodul (47) oder einem Analog-Ein-/Ausgabemodul, einem Digital-Eingabemodul (45) oder einem Digital-Ein-/Ausgabemodul und mindestens einem Zählermodul (46) bestückt ist.

## Claims

1. Modular control system with an intelligent sub-unit (IUE), in particular module memory-programmable control with an intelligent I/O module which has a number of module receptacles (16) for function modules (24-27,29,45-47,52), which module receptacles are formed substantially the same electrically and mechanically,
- whereby the module receptacles (16) have module interfaces (17) connected to an internal bus (11) and having a plurality of contact points,
- whereby the module receptacles (16) can be fitted with function modules (24-27,29,45-47,52) in an application-specific manner,
- whereby the module interfaces (17) are connected to each other by way of a module location bus (18),
- whereby in the intelligent sub-unit (IUE) by way of the internal bus (11) a processor (5) controlling the intelligent sub-unit (IUE) and a memory (10) containing at least one processor program are connected to each other,
characterized in that
- the intelligent sub-unit (IUE) can be connected by way of an external system bus (2) to a higher-level central unit (CPU), and has a bus interface unit (6) which can be connected to the external system bus (2),
- whereby the internal bus (11) can be operated at a higher clock-pulse rate than the external system bus (2) and
- whereby at least part of the function modules (24-27,29,45-47,52) has its own intelligent unit (31) for example a controller (31).

2. Modular control system according to claim 1, characterized in that the function modules (24-27,29,45-47,52) are constructed at least in part as digital and analog input and output modules, perhaps also as digital and analog input/output modules.

3. Modular control system according to claim 1 or 2, characterized in that a few (19) of the contact points of the module interfaces (17) are connected to an interrupt input of the processor (5).

4. Modular control system according to claim 3, characterized in that an interrupt controller (20) is arranged between the few contact points (19) and the interrupt input.

5. Modular control system according to one of the above claims, characterized in that it has at least one separate signal processor, preferably parallel to the central unit (CPU) or on a signal processor module.

6. Modular control system according to one of the above claims, characterized in that the intelligent sub-unit (IUE) has a programming interface (7) to connect a programming unit (12), for example a programming device (12).

7. Modular control system according to one of the above claims, characterized in that the function modules (24-27,29,45-47,52) are constructed as pluggable function modules.

8. Modular control system according to one of the above claims, characterized in that the intelligent sub-unit (IUE) is fitted with an analog output module (47) or an analog input/output module, a digital input module (45) or a digital input/output module and at least one meter module (46).

## Revendications

1. Système de commande de structure modulaire comportant une sous-unité (IUE) intelligente, notamment une commande à programme enregistré de structure modulaire, comportant un module périphérique intelligent, qui comporte un certain nombre de récepteurs (16) pour des modules fonctionnels (24 à 27, 29, 45 à 47, 52), qui sont sensiblement de même forme électrique et mécanique,
- les récepteurs (16) de module comportant des interfaces (17) de module reliées à un bus (11) interne et comportant une multiplicité de points de contact,
- les récepteurs (16) de module pouvant être équipés de manière spécifique à l'utilisation de modules fonctionnels (24 à 27, 29, 45 à 47, 52),
- les interfaces (17) de module étant reliées entre elles par l'intermédiaire d'un bus (18) à emplacement d'enfichage,
- un processeur (5) commandant la sous-unité intelligente (IUE) et une mémoire (10) contenant au moins un programme de processeur étant reliés entre eux dans la sous-unité intelligente (IUE) par l'intermédiaire du bus interne (11),
caractérisé en ce que
- la sous-unité intelligente (IUE) peut être reliée par l'intermédiaire d'un bus (2) de système externe à une unité centrale (CPU) d'un rang hiérarchique supérieur et comporte une unité (6) d'interface de bus pouvant être reliée au bus (2) de système externe,
- le bus interne (11) peut fonctionner à une cadence plus grande que le bus (2) de système externe et
- au moins une partie des modules fonctionnels (24 à 27, 29, 45 à 47, 52) comporte une unité intelligente propre (31), par exemple un contrôleur (31).

2. Système de commande de structure modulaire suivant la revendication 1, caractérisé en ce que les modules fonctionnels (24 à 27, 29, 45 à 47, 52) sont au moins en partie sous forme de modules numériques ou analogiques d'entrée ou de sortie, éventuellement également de modules d'entrée/sortie numériques ou analogiques.

3. Système de commande de structure modulaire suivant la revendication 1 ou 2, caractérisé en ce que quelques uns (19) des points de contact des interfaces (17) des modules sont reliés à une entrée d'interruption du processeur (5).

4. Système de commande de structure modulaire suivant la revendication 3, caractérisé en ce qu'un contrôleur (20) d'interruption est disposé entre les quelques points (19) de contact et l'entrée d'interruption.

5. Système de commande de structure modulaire suivant l'une des revendications précédentes, caractérisé en ce qu'il comporte au moins un processeur de signaux distinct, de préférence en parallèle avec l'unité centrale (CPU) ou sur un module de processeur de signaux.

6. Système de commande de structure modulaire suivant l'une des revendications précédentes, caractérisé en ce que la sous-unité (IUE) intelligente comporte une interface (7) de programmation pour le raccordement d'une unité (12) de programmation, par exemple d'un appareil (12) de programmation.

7. Système de commande de structure modulaire suivant l'une des revendications précédentes, caractérisé en ce que les modules fonctionnels (24 à 27, 29, 45 à 47, 52) sont sous forme de modules fonctionnels enfichables.

8. Système de commande de structure modulaire suivant l'une des revendications précédentes, caractérisé en ce que la sous-unité intelligente (IUE) est équipée d'un module (47) analogique de sortie ou d'un module analogique d'entrée/sortie, d'un module numérique d'entrée (45) ou d'un module numérique d'entrée/sortie et d'au moins un module (46) de compteur.
